Europäisches Patentamt

European Patent Office

Office européen des brevets

(19)

(11) Publication number: **0 057 680**

**B1**

(12) **EUROPEAN PATENT SPECIFICATION**

(45) Date of publication of patent specification: **16.07.86**

(51) Int. Cl.⁴: **H 02 P 7/68**

(21) Application number: **81901171.9**

(22) Date of filing: **18.08.80**

(86) International application number:
**PCT/US80/01070**

(87) International publication number:
**WO 82/00738 04.03.82 Gazette 82/07**

(54) **DUAL MOTOR DRIVE SYSTEM.**

(43) Date of publication of application:
**18.08.82 Bulletin 82/33**

(45) Publication of the grant of the patent:
**16.07.86 Bulletin 86/29**

(84) Designated Contracting States:
**DE FR GB SE**

(56) References cited:
**DE-A-2 203 770**
**FR-A-2 276 192**
**US-A-3 936 707**
**US-A-3 950 681**
**US-A-4 028 597**
**US-A-4 054 817**
**US-A-4 081 725**

(73) Proprietor: **CATERPILLAR INDUSTRIAL INC.**
**5960 Heisley Road**
**Mentor Ohio 44060 (US)**

(72) Inventor: **MELOCIK, Grant C.**
**313 Wilson Mills 109**
**Chardon OH 44024 (US)**

(74) Representative: **Skone James, Robert Edmund et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to electrically operated dual motor drive systems having first and second traction motors driven by a DC power source in a first mode of operation with a first current direction and in a second mode of operation with a second current direction; and first and second motor control circuit means each motor control circuit means comprising coil operated contacts and being arranged to establish oppositely directed complemental current paths from the source through the first and second motors respectively particularly for industrial vehicles and the like. Such systems are hereinafter referred to as of the kind described.

Multiple-motor electric vehicles such as industrial lift trucks are known in the art (DE—A—2,203,770; FR—A—2,276,192). At least one such vehicle employs reversible traction motors individually coupled to the left and right drive wheels. Each motor includes control circuitry for selecting the direction of motor operation.

In the prior art, such control circuitry includes two sets of contacts for each motor, one set causing current to flow from a power supply through the motor in one direction and the other set causing current to flow through the motor in the opposite direction. A two-motor vehicle requires a total of eight contacts and four coils.

To move in a given direction, the operator selects the appropriate position on a direction selector device. The associated contacts are energised to direct current through each of the motors in the same direction thereby creating vehicle movement in the selected direction.

When the user places the direction selector in the reverse direction, the remaining coil of each motor is selected and the previously energised coils are de-energised. Under these conditions, the motor control circuit contacts which are selected cause the current to flow through the motors in the reverse direction and thereby impart vehicle motion in the opposite direction. If, however, there is a power failure this will lead to an uncontrolled situation of the motors which is very undesirable.

In accordance with the present invention an electrically operated dual motor drive system of the kind described is characterised in that the first motor control circuit means has a first set of contacts which are open in an uncontrolled condition for directing current from the power source through the first motor in a first current direction, and a second set of contacts which are closed in the uncontrolled condition for directing current from the power source through the first motor in a second current direction opposite to the first current direction; in that the second motor control circuit means has a first set of contacts which are closed in an uncontrolled condition for directing current from the power source through the second motor in a first current direction, and a second set of contacts which are open in the uncontrolled condition for directing current from the power source through the second motor in a second current direction; in that a first coil is connected to both sets of contacts in the first motor control circuit; in that a second coil is connected to both sets of contacts in the second motor control circuit; and in that control means is provided selectively to energise the first and second coils to control actuation of the contacts in the first and second motor control circuit means, respectively.

In contrast to the prior art, the invention provides a dual motor drive system in which when the first and second motor control circuit means are in an uncontrolled condition one of the current paths is completed whereas in the prior art a neutral position could be obtained in which none of the coils were energised and so none of the current paths were completed leading to a dangerous uncontrolled condition of the drive system.

Preferably, the uncontrolled condition of the first motor control circuit means produces a first direction of first traction motor rotation, and the uncontrolled condition of the second motor control circuit means produces a second direction of second traction motor rotation, the first and second directions of rotation being in opposite senses.

In this example, safety is achieved by the preconditioned settings of the contacts such that the motors counter rotate to prevent run away of the vehicle in response to a given system state in which both coils are de-energised.

A further advantage with the present invention is that the number of solenoid coils can be reduced. This enables the elimination of certain packaging constraints thus reducing vehicle size and weight. Furthermore, the portion of current from the power source such as a battery system which goes into non-propulsion activities can be reduced. Another advantage is the elimination of control functions and electrical transient sources.

An example of a dual motor drive system according to the invention will now be described with reference to the accompanying drawings, in which:—

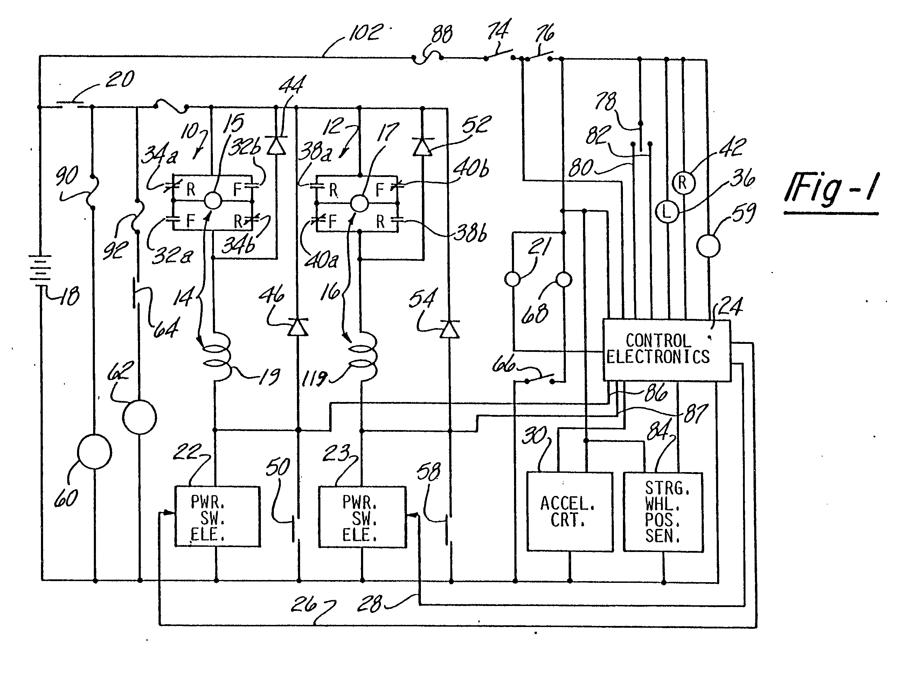

Figure 1 is a schematic circuit diagram of the system; and,

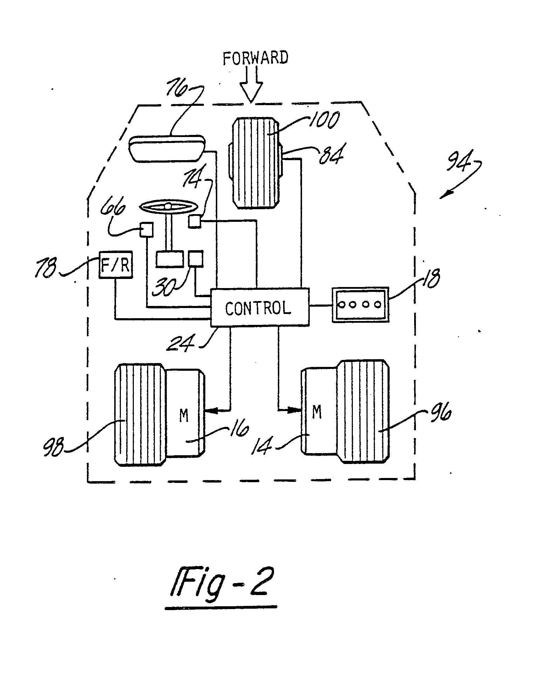

. Figure 2 is a block diagram of an industrial vehicle in which the system of Figure 1 may be utilised.

Referring to Figure 1, the preferred embodiment of the invention is shown in connection with an electrically operated dual motor system including left and right traction motor control circuits 10 and 12, respectively. Left motor control circuit 10 includes a reversible electric traction motor 14, with the right circuit 12 similarly including a reversible electric traction motor 16. Motors 14, 16 include armatures 15, 17 and field windings 19, 119, respectively, as known in the art. Both traction motor circuits 10 and 12 receive DC current from a DC power source such as a large heavy duty battery 18. A line contactor 20 couples the electrical power to motor control circuits 10 and 12 when energized by its associated coil 21. The mean current value through traction motor circuit 10 is controlled by a power switching element 22. Similarly, traction motor 16 is connected in series with a power switching element 23 which is substantially identical to element 22. As is known in the art, power switching elements 22 and 23 are pulse and/or frequency modulated to vary the mean voltage applied to their respective motor control circuits 10 and 12 according to the desired motor speeds. The modulation of power switching elements 22 and 23 is controlled by a central controller 24 which receives various status information from the system as input signals and provides selected output signals depending upon the status of the input signals. Preferably, controller 24 is a microprocessor such as a number 3870 component manufactured by Mostek Corporation. Controller 24 supplies output signals on lines 26 and 28 to control the modulation of switching elements 22 and 23, respectively. Generally, the modulation control signals are determined by the state of an accelerator position sensor circuit 30 which detects the position of a speed select device. Power switching elements 22 and 23 may be independently or differentially varied according to the various operating parameters of the vehicle in which traction motors 14 and 16 are mounted.

Special attention is now drawn to the direction control contacts of the motor control circuits 10 and 12. Left circuit 10 includes a first set of normally open contacts 32a and 32b. When actuated or closed, contacts 32a and 32b direct current through armature 15 in a first direction which is from right to left with reference to Figure 1. A second set of contacts 34a and 34b are also provided. Unlike contacts 32a and 32b, contacts 34a and 34b are normally closed such that they direct current in an opposite direction through armature 15 in their steady state or de-actuated mode. In such state, contacts 34a and 34b direct current from battery 18 from left to right through armature 15. Both sets of contacts 32a, 32b, and 34a, 34b are actuated by a single coil 36. When energized, coil 36 serves to close normally open contacts 32a and 32b and simultaneously open the normally closed contacts 34a and 34b. The energization of coil 36 is controlled by appropriate signals from controller 24.

Focusing attention on the right traction motor control circuit 12, it also includes two sets of contacts. Normally open contacts 38a and 38b direct current flow through armature 17 in the direction characterized by a left to right current flow when actuated or closed. it should be noted that the closure of normally open contacts 38a and 38b causes current flow through the right traction motor armature 17 in an opposite direction from the current flow through left traction motor armature 15 when normally open contacts 32a and 32b are actuated. Normally closed contacts 40a and 40b when de-actuated cause current flow in a right to left direction through right traction motor armature 17. Again, it should be noted that this direction is opposite from the current flow through left traction motor armature 15 when the normally closed contacts 34a and 34b are in a closed position. Both sets of contacts 38a, 38b, and 40a, 40b are actuated by a single coil 42. Coil 42 is energized by an appropriate signal from controller 24. When energized, coil 42 serves to close the normally open contacts 38a, 38b and to open the normally closed contacts 40a, 40b.

Left motor control circuit 10 further includes a plugging diode 44 and a flyback diode 46 to provide a re-circulating path for current which is generated by motor 14 when coasting; i.e. when driven by the load or its own inertia. Circuit 10 is completed by the provision of a bypass contactor 50 which operates, when actuated, to provide an alternate current path for motor 14 during high load or maximum speed conditions thereby bypassing power switching element 22. Similarly, right motor control circuit 12 also includes a plugging diode 52, flyback diode 54, and a bypass contactor 58, all of which operate in a similar manner to their counterparts in the left motor control circuit 10. Both bypass contactors 50 and 58 are controlled by coil 59 coupled to controller 24.

The system further includes a power steering motor 60 which is also powered by battery 18 when line contactor 20 is actuated. The energization of a lift motor 62 is controlled by the position of a lift contactor 64. Lift contactor 64 is actuated upon closure of a lift switch 66 which energizes lift contactor coil 68.

Controller 24 includes a plurality of inputs which receive various status condition signals within the system as detected by a variety of sensing devices. In addition to the accelerator circuit 30 noted above, switch 74 provides a control signal indicative of the position of a key switch in the vehicle and switch 76 detects the mounting of the operator onto a seat for driving the vehicle. A three positioned direction selector switch 78 selectively provides control input signals on line 80 when in a forward position, on line 82 when in a reverse position, with neither signal lines being selected when in a neutral position. Other input signals to controller 24 are derived from a wheel position sensor 84 which provides control signals indicative of the position of a rotating steering wheel as will be more fully described below. Signal lines 86, 87 serve to provide an indication of the condition of power switching elements 22, 23 and bypass contactors 50, 58 during system operation as will also be more fully described below. Fuses 88, 90, and 92 complete the system circuitry to provide overload protection at various points within the system.

Referring now to Figure 2, the operation of the system of Figure 1 will now be described with reference to the application of said system to an electrically powered three wheel industrial vehicle 94 such as a fork-lift truck. In such an application the armature 15 of left traction motor 14 is mechanically connected in driving relationship with the left front wheel 96 and the armature 17 of right traction motor 16 is similarly associated with the right wheel 98 of the vehicle. Wheel position sensor 84 detects the angular position of the rear dirigible wheel 100 of the vehicle. The output of sensor 84 may be utilized to differentially vary the switching rates of power switching elements 22 and 23 at extreme angles of wheel 100. Key switch 74 is located near the operator station. Seat switch 76 is arranged in a known manner to close when an operator assumes a driving position on the seat. Accelerator circuit 30 detects the position of the accelerator and provides output signals indicative of its displacement. Lift switch 66 provides the operator with a means for selectively activating a lift mechanism (not shown) which is generally associated with such vehicles. A manually operable direction selector 78 controls the selection of forward or reverse movement of the vehicle 94.

In normal operation, the operator first turns on key switch 74. With reference to Figure 1, this supplies power over line 102 from battery 18 to controller 24. Controller 24 then determines the status of seat switch 76. If the operator has mounted the seat thereby closing switch 76 the controller 24 will provide an output signal to energize line contactor coil 21. This actuates line contactor 20 to couple battery 18 power to the motor control circuits 10 and 12. Immediately upon closure of line contactor 20, controller 24 checks the status of input lines 86 and 87. Lines 86, 87 will be substantially at the positive battery voltage if power switching elements 22 and 23 and bypass contactors 50, 58 are properly operating at this stage of the operation. If power switching elements 22, 23 are short circuited or if bypass contactors 50, 58 are closed, then signal lines 86 and/or 87 will be substantially at the negative battery voltage or ground level. If such a condition exists, controller 24 will remove power from the line contactor coil 21 thereby de-energizing line contactor 20 and removing power from the system. If the start-up check succeeds, the operator will place direction selector 78 in either the forward or reverse position. The coupling of the wiper of the direction selector 78 to one of lines 80 or 82 will cause controller 24 to selectively energize coil 36 or 42. Assume that the user selects the forward position in which line 80 is contacted. Controller 34 responds by energizing coil 36 which, in turn, closes normally open contacts 32a and 32b and simultaneously opens normally closed contacts 34a, 34b of the left motor control circuit 10. Note that the contacts in the right motor control circuit 12 are not affected. With the contacts in this state, the current flow through both motors 14 and 16 is in a uniform direction causing them to rotate in the forward direction. The current path through left motor 14 is established by contacts 32a and 32b, with the current flowing from right to left through armature 15. The current path through right motor armature 17 is from right to left through contacts 40a and 40b. Controller 24 responds to control signals from accelerator circuit 30 by modulating the switching elements 22 and 23 in a manner known in the art to control vehicle speed.

If the user desires the vehicle 94 to move in a reverse direction, selector 78 is moved such that the wiper contacts line 82. In response thereto, controller 24 energizes coil 42 instead of coil 36. Under these conditions the left motor control circuitry 10 contacts remain in their steady state condition but the contacts of the right motor circuitry 12 are actuated. Such actuation causes normally open contacts, 38a, 38b to close and the normally closed contacts 40a and 40b to open. Hence, current flow through the motors 14 and 16 is directed therethrough in the same left to right direction causing uniform motor rotation in the reverse direction. Note again that the energization of coil 42 does not effect the contacts in the left motor control circuit 10.

Thus, it can be seen that the present invention provides uniquely designed motor control circuitry which requires only two directional coils in comparison with the four coils previously used in the industry. In the prior art four coil scheme, the control logic would of necessity energize two coils at a time thereby causing an appreciable amount of current flow drain in the circuit. In addition to the savings of costs and space, the present invention minimizes these troublesome circuit conditions since only one coil is energized at a time.

When the selector 78 is in the neutral position in which neither line 80 or 82 is contacted by the wiper, controller 24 does not energize either of coils 36 or 42. Consequently, the contacts of the left and right motor control circuits 10 and 12 assume their steady state condition.

If the system is functioning normally, controller 24 will de-energize coils 21 and 59 to open line contactor 20 and bypass contactors 40, 58, respectively, to remove power to the motor control circuitry in the event of a detected system malfunction, such as a short circuit condition in the power switching elements 22, 23. However, in the event of total failure of the controller 24 in which neither of the coils 36 or 42 are energized, the steady state condition of the motor control circuit contacts will condition the current flow through their respective motors such that they operate in opposite directions or counter-rotate. By referring to the state of the contacts shown in Figure 1, it can be seen that current will flow through the left motor 14 in a left to right direction whereas current flow through motor 16 will be in a right to left direction. Accordingly, a run away condition of the vehicle is prevented. Instead of rotating in unison, the motors now operate in opposite directions to substantially counteract each other. Depending upon the position of the steering wheel 100, vehicle 94 will either remain stationary or will move in a generally circular path.

In view of the foregoing it can now be realized that the system not only provides economies of cost and space, but it also provides distinctive fail-safe measures in the event of complete system malfunction. It is also important to note that the same line contactor 20 which is used to apply power to the power steering motor 60 is used as the main system power disconnector. This line contactor in the four coil prior art approach was used merely to supply power to the power steering motor. In the present system however, it provides a dual function without an increase in manufacturing costs and facilitates the implementation of the unique two coil approach. In fact, the disclosed motor control circuit contact arrangement need not be always employed if other fail-safe provisions are instead utilized.

Therefore, while this invention was described in connection with a particular example thereof, various modifications will become apparent to one skilled in the art. For example, although the invention has been described with reference to a three wheel industrial vehicle having two traction motors and a single dirigible wheel, it is equally applicable to four wheeled vehicles having two dirigible wheels as well as to track laying vehicles hving no dirigible wheels. In addition, the invention may be applied to other dual motor devices. Similarly, the controller 24 may be replaced with equivalent hard wired circuitry including solenoid operated relays and other conventional logic circuitry.

## Claims

1. An electrically operated dual motor drive system having first and second traction motors (14, 16) driven by a DC power source (18) in a first mode of operation with a first current direction and in a second mode of operation with a second current direction; and first and second motor control circuit means (10, 12) each motor control circuit means comprising coil operated contacts and being arranged to establish oppositely directed complemental current paths from the source (18) through the first and second motors (14, 16) respectively characterised in that the first motor control circuit means (10) has a first set of contacts (32a, 32b) which are open in an uncontrolled condition for directing current from the power source (18) through the first motor (14) in the first current direction, and a second set of contacts (34a, 34b) which are closed in the uncontrolled condition for directing current from the power source (18) through the first motor (14) in the second current direction opposite to the first current direction; in that the second motor control circuit means (12) has a first set of contacts (40a, 40b) which are closed in an uncontrolled condition for directing current from the power source (18) through the second motor (16) in the first current direction, and a second set of contacts (38a, 38b) which are open in the uncontrolled condition for directing current from the power source (18) through the second motor (16) in the second current direction; in that a first coil (36) is connected to both sets of contacts (32a, 32b, 34a, 34b) in the first motor control circuit (10); in that a second coil (42) is connected to both sets of contacts (38a, 38b, 40a, 40b) in the second motor control circuit (12); and in that control means (24) is provided selectively to energise the first and second coils (36, 42) to control actuation of the contacts in the first and second motor control circuit means (10, 12), respectively.

2. A system according to claim 1, wherein the uncontrolled condition of the first motor control circuit means (10) produces a first direction of first traction motor rotation, and the uncontrolled condition of the second motor control circuit means (12) produces a second direction of second traction motor rotation, the first and second directions of rotation being in opposite senses.

3. A system according to claim 2, further comprising a direction selector device (78) having forward, reverse, and neutral positions, the control means (24) being adapted to energise the first coil (36) in response to the direction selector device (78) being in the forward position, to energise the second coil (42) in response to the direction selector device (78) being in the reverse position, and to de-energise both coils (36, 42) in response to the direction selector device being in the neutral position.

4. A system according to any of the preceding claims, further including a switch (20) connected between the source (18) and both of the first (10) and second (12) motor control circuit means.

5. A system according to claim 4, further comprising sensing means (74, 76, 78, 86, 87) for detecting pre-selected system conditions and enabling signals to be delivered to the control means (24) in response to the detected conditions, the control means (24) being adapted to receive the signals and to controllably operate the line switch (20) in response to the received signals.

6. A system according to claim 5, wherein the sensing means includes circuit means (86, 87) for delivering particular signals to the control means (24) indicating short circuit conditions associated with the first and second motors (14, 16), the control means (24) being adapted to open the line switch (20) in response to the particular signals.

7. A system according to at least claim 4, further comprising a third motor (60) coupled in series with the power source (18) and the line switch (20), and in parallel with the first and second motors (14, 16).

8. A vehicle including an electrically operated dual motor drive system according to any of the preceding claims, wherein the first and second traction motors (14, 16) are connected to non-dirigible wheels (96, 98) of the vehicle, the vehicle further including at least one dirigible wheel (100) for direction control.

9. A vehicle according to claim 8, when dependant on claim 6, wherein the sensing means includes a key switch (74) and a seat switch (76) adapted to deliver particular signals to the control means indicating their respective status conditions, the control means (24) being adapted to control energisation of the line switch (20) in response to the particular signals.

## Revendications

1. Système d'entraînement de deux moteurs actionnés électriquement comprenant un premier et un second moteurs de traction (14, 16) entraînés par une source d'alimentation en courant continu (18), le courant ayant un sens donné dans un premier mode de fonctionnement, et un second sens dans un second mode de fonctionnement; un premier et un second circuits de commande de moteur (10, 12), chaque circuit de commande de moteur comportant des contacts actionnés par bobine, et étant disposé en vue d'établir deux lignes de courant complémentaires et opposées depuis la source d'alimentation (18) traversant respectivement le premier et le second moteur (14, 16), caractérisé en ce que le premier circuit de commande de moteur (10) comprend une première série de contacts (32a, 32b) ouverts dans un état non commandé en vue d'envoyer le courant venant de la source d'alimentation (18) dans le premier moteur (14) selon le premier sens, et une deuxième série de contacts (34a, 34b) fermés dans un état non commandé en vue d'envoyer le courant venant de la source d'alimentation (18) dans le premier moteur (14) selon le second sens, opposé au premier; en ce que le second circuit de commande de moteur (12) comporte une première série de contacts (40a, 40b) fermés dans un état non commandé en vue d'envoyer le courant venant de la source d'alimentation (18) dans le second moteur (16) selon le premier sens, et une seconde série de contacts (38a, 38b) ouverts dans un état non commandé en vue d'envoyer le courant venant de la source d'alimentation (18) dans le second moteur (16) selon le second sens; en ce qu'une première bobine (36) est connectée aux deux séries de contacts (32a, 32b, 34a, 34b) dans le premier circuit de commande de moteur (10); en ce qu'une seconde bobine (42) est connectée aux deux séries de contacts (38a, 38b, 40a, 40b) dans le second circuit de commande de moteur (12), et en ce qu'un moyen de commandes (24) est prévu pour exciter sélectivement la première et la seconde bobine (36, 42) afin de commander l'actionnement des contacts respectivement dans les premier et second circuits de commande de moteur (10, 12).

2. Système selon la revendication 1, dans lequel l'état non commandé du premier circuit de commande de moteur (10) provoque la rotation du premier moteur de traction dans un premier sens, et l'état non commandé du second circuit de commande (12) provoque la rotation du second moteur de traction dans un second sens, le premier et le second sens de rotation étant opposés.

3. Système selon la revendication 2, comprenant en outre un sélecteur de sens (78) comportant une position avant, arrière et un point mort, le moyen de commande (24) étant destiné à exciter la première bobine (36) en réponse au sélecteur de sens (78) lorsqu'il est en position avant, et à exciter la seconde bobine (42) en réponse au sélecteur de sens (78) lorsqu'il est en position arrière, et à désactiver les deux bobines (36, 42) en réponse au sélecteur de sens lorsqu'il est au point mort.

4. Système selon l'une quelconque des revendications précédentes, comprenant en outre un commutateur (20) monté entre la source d'alimentation (18) et à la fois le premier et le second circuits de commande de moteur (10) et (12).

5. Système selon la revendication 4, comprenant en outre des moyens de détection (74, 76, 78, 86, 87) pour détecter les états de présélection du système et pour pouvoir envoyer des signaux au moyen de commande (24) en réponse aux états détectés, le moyen de commande (24) étant destiné à recevoir les signaux et à actionner de manière contrôlable le commutateur de ligne (20) en réponse aux signaux reçus.

6. Système selon la revendication 5, dans lequel les moyens de détection comprennent des circuits (86, 87) destinés à envoyer au moyen de commande des signaux particuliers (24) indiquant la présence d'un court-circuit dans le premier et le second moteurs (14, 16), le moyen de commande (24) étant destiné à ouvrir le commutateur de ligne (20) en réponse à ces signaux particuliers.

7. Système selon la revendication 4 au moins, comprenant en outre un troisième moteur (60) relié en série à la source d'alimentation (18) et au commutateur de ligne (20), et en parallèle au premier et au second moteurs (14, 16).

8. Véhicule comprenant un système d'entraînement de deux moteurs actionnés électriquement selon l'une quelconque des revendications précédentes, dans lequel le premier et le second moteurs de traction (14, 16) sont reliés aux roues non orientables (96, 98) du véhicule, le véhicule comprenant en outre au moins une roue orientable (100) pour la commande de direction.

9. Véhicule selon la revendication 8, quand elle dépend de la revendication 6, dans lequel les moyens de détection comportent un commutateur de contact (74) et un commutateur de siège (76) destinés à envoyer des signaux particuliers au moyen de commande, indiquant leurs états respectifs, le moyen de commande (24) étant destiné à commander l'excitation du commutateur de ligne (20) en réponse à ces signaux particuliers.

## Patentansprüche

1. Ein elektrisch betätigtes Dualmotor-Antriebssystem mit ersten und zweiten Zugmotoren (14, 16), angetrieben durch eine Gleichspannungsleistungsquelle (18) in einer ersten Betriebsart mit einer ersten Stromrichtung und in einer zweiten Betriebsart mit einer zweiten Stromrichtung, und erste und zweite Motorsteuerschaltungsmittel (10, 12), wobei jedes der Motorsteuerschaltungsmittel spulenbetätigte Kontakte aufweist und derart angeordnet ist, um entgegengesetzt gerichtete komplementäre Strompfade von der Quelle (18) durch die ersten bzw. zweiten Motore (14, 16) vorzusehen, dadurch gekennzeichnet, daß die ersten Motorsteuermittel (10) einen ersten Satz von Kontakten (32a, 32b) aufweisen, die in einem nichtgesteuerten Zustand offen sind, um Strom von der Leistungsquelle (18) durch den ersten Motor (14) in der ersten Stromrichtung zu leiten, und einen zweiten Satz von Kontakten (34a, 34b), die in dem nicht-gesteuerten Zustand geschlossen sind, um Strom von der Leistungsquelle (18) durch den ersten Motor (14) in der zweiten Stromrichtung entgegengesetzt zur ersten Stromrichtung zu leiten, und ferner dadurch gekennzeichnet, daß die zweiten Motorsteuerschaltungsmittel (12) einen ersten Satz von Kontakten (40a, 40b) aufweisen, die in einem nicht-gesteuerten Zustand geschlossen sind, um Strom von der Leistungsquelle (18) durch den zweiten Motor (16) in der ersten Stromrichtung zu leiten, und einen zweiten Satz von Kontakten (38a, 38b), die in nicht-gesteuerten Zustand offen, sind, um Strom von der Leistungsquelle (18) durch den zweiten Motor (16) in der zweiten Stromrichtung zu leiten und ferner dadurch gekennzeichnet, daß eine erste Spule (36) mit beiden Sätzen von Kontakten (32a, 32b, 34a, 34b) in der ersten Motorsteuerschaltung (10) verbunden ist, und daß ferner eine zweite Spule (42) mit beiden Sätzen von Kontakten (38a, 38b, 40a, 40b) in der zweiten Motorsteuerschaltung (12) verbunden ist, und ferner schließlich dadurch gekennzeichnet, daß Steuermittel (24) vorgesehen sind, um selektiv die ersten und zweiten Spulen (36, 42) zum Erregen um die Betätigung der Kontakte in den ersten bzw. zweiten Motorsteuerschaltungsmitteln (10, 12) zu bewirken.

2. System nach Anspruch 1, wobei der nichtgesteuerte Zustand der ersten Motorsteuerschaltungsmittel (10) eine erste Richtung der ersten Zugmotordrehung bewirkt, und daß der nicht-gesteuerte Zustand der zweiten Motorsteuerschaltungsmittel (12) eine zweite Richtung der zweiten Zugmotordrehung bewirkt, wobei die ersten und zweiten Drehrichtungen entgegengesetzt gerichtete Sinne aufweisen.

3. System nach Anspruch 2, wobei eine Richtungswellenvorrichtung (78) vorgesehen ist mit Vorwärts-, Rückwärts- und Neutralpositionen, wobei die Steuermittel (24) dazu geeignet sind, um die erste Spule (36) zu erregen, und zwar infolge der Tatsache, daß sich die Richtungswählvorrichtung (78) in der Vorwärtsposition befindet, wobei die Steuermittel ferner geeignet sind, die zweite Spule (42) zu erregen, und zwar dann, wenn sich die Richtungswählvorrichtung (78) in der Rückwärtsposition befindet, und wobei ferner beide Spulen (36, 42) enterregt werden, wenn sich die Richtungswählvorrichtung in der Neutralposition befindet.

4. System nach einem der vorhergehenden Ansprüche mit einem Schalter (20), verbunden zwischen der Quelle (18) und den beiden der ersten (10) und zweiten (12) Motorsteuerschaltungsmittel.

5. System nach Anspruch 4, wobei ferner Abfühlmittel (74, 76, 78, 86, 87) vorgesehen sind, um vorgewählte Systembedingungen festzustellen und die Lieferung von Signalen an die Steuermittel (24) zu ermöglichen, und zwar infolge von festgestellten Bedingungen, wobei die Steuermittel (24) dazu geeignet sind, Signale zu empfangen und den Leitungsschalter (20) infolge der empfangenen Signale steuerbar zu betätigen.

6. System nach Anspruch 5, wobei die Abfühlmittel Schaltungsmittel (86, 87) aufweisen, um spezielle Signale an die Steuermittel (24) zu liefern, welche Kurzchlußbedingungen in Verbindung mit den ersten und zweiten Motoren (14, 16) anzeigen, wobei die Steuermittel (24) geeignet sind, den Leitungsschalter (20) infolge der speziellen Signale zu öffnen.

7. System nach mindestens Anspruch 4, wobei ferner ein dritter Motor (60) in Serie mit der Leistungsquelle (18) und dem Leitungsschalter (20) gekuppelt ist und zwar parallel mit den ersten und zweiten Motoren (14, 16).

8. Fahrzeug mit einem elektrisch betätigten Dualmotor-Antriebssystem nach einem der vorhergehenden Ansprüche, wobei die ersten und zweiten Zugmotore (14, 16) mit nichtlenkbaren Rädern (96, 98) des Fahrzeugs verbunden sind, und wobei das Fahrzeug ferner mindestens ein lenkbares Rad (100) zur Richtungssteuerung aufweist.

9. Fahrzeug nach Anspruch 8 in Abhängigkeit von Anspruch 6, wobei die Abfühlmittel einen Schlüsselschalter (74) und einen Sitzchalter (76) aufweisen, und zwar geeignet zur Lieferung spezieller Signale an die Steuermittel zur Anzeige der entsprechenden Statusbedingungen, wobei die Steuermittel (24) geeignet sind, um die Erregung des Leitungsschalters (20) infolge dieser speziellen Signale zu steuern.

*Fig-1*

0 057 680

_Fig - 2_